**Europäisches Patentamt**

**European Patent Office**

**Office européen des brevets**

(19)

(11) Veröffentlichungsnummer: **0 313 756 B1**

(12) **EUROPÄISCHE PATENTSCHRIFT**

(45) Veröffentlichungstag der Patentschrift: **24.06.92**

(51) Int. Cl.5: **B01J 8/10**, //B01J3/00

(21) Anmeldenummer: **88113846.5**

(22) Anmeldetag: **25.08.88**

(54) **Reaktor zum Behandeln von Schüttgütern oder dergleichen.**

(30) Priorität: **27.10.87 DE 3736316**

(43) Veröffentlichungstag der Anmeldung:
**03.05.89 Patentblatt 89/18**

(45) Bekanntmachung des Hinweises auf die
Patenterteilung:
**24.06.92 Patentblatt 92/26**

(84) Benannte Vertragsstaaten:
**AT BE CH DE ES FR GB IT LI NL**

(56) Entgegenhaltungen:
**WO-A-82/02246**          **DE-A- 2 309 268**
**DE-A- 2 913 032**          **DE-C- 359 540**
**FR-A- 2 335 526**          **GB-A- 1 153 413**
**GB-A- 2 034 195**

(73) Patentinhaber: **Gebr. Lödige Maschinenbau
Gesellschaft mbH
Elsener Strasse 7-9
W-4790 Paderborn(DE)**

(72) Erfinder: **Grob, Armin, Dipl.-Ing.
Zur Schmiede 23
W-4790 Paderborn(DE)**
Erfinder: **Rasche, Reinhard
Savingnystrasse 24
W-4792 Bad Lippspringe(DE)**

(74) Vertreter: **Türk, Gille, Hrabal
Brucknerstrasse 20
W-4000 Düsseldorf 13(DE)**

## Beschreibung

Die Erfindung betrifft einen Reaktor zum Behandeln von Schüttgütern oder dergleichen, der einen druckdicht zu verschließenden, horizontal angeordneten, trommelförmigen Produktbehälter aufweist, in welchem mittig ein Rührwerk angeordnet ist, dessen zentrale Welle in Dichtungen durch die Stirnwände des Produktbehälters hindurchragt und in an den Stirnenden des Produktbehälters angeordneten Lagern drehbar abgestützt ist.

Bei bekannten Reaktoren dieser Art ist das in dem liegenden Produktbehälter eingebaute Rührwerk bzw. Schleuderwerk mit seiner mittig angeordneten Welle in sogenannten Lagerlaternen gelagert, welche sich außerhalb des Produktbehälters an den Stirnenden oder Kopfstücken des Produktbehälters befinden und dort angeflanscht sind. Die Durchführungen der Welle durch die Stirnwände des Produktbehälters zur eigentlichen Lagerung sind abgedichtet, weil im Betrieb im Inneren des Produktbehälters ein Überdruck oder Unterdruck herrscht, d.h. ein vom Atmosphärendruck abweichender Druck. Die verwendeten Dichtungen bzw. Dichtsysteme richten sich nach produkt- und verfahrensspezifischen Kriterien und müssen so ausgelegt sein, daß durch die Dichtungen hindurch und damit über die Oberfläche der sich drehenden Welle keine spürbaren Leckverluste entstehen, d.h. bei Überdruck im Produktbehälter aus diesem kein störender Leckverlust nach außen stattfindet und bei Unterdruck im Produktbehälter kein spürbarer Druckausgleich von außen durch die Dichtungen erfolgt. Diesen Forderungen entsprechen beispielsweise doppelt wirkende Gleitringdichtungen. Derartige Forderungen erfüllende Dichtungen sind, gleichgültig welcher Konstruktion im Einzelfalle, recht aufwendig und dementsprechend kostspielig. Hinzu kommen die durch Verschleiß bedingten hohen Betriebskosten.

Aus der DE-A 2 913 032 ist ein Autoklav mit motorischem Antrieb für eine in seinem Inneren angeordnete Umwälzvorrichtung bekannt, dessen Motor an der Außenseite des Autoklaven angebaut ist, wobei
der Motor in einem druckfesten Gehäuse eingebaut ist, das an der Außenseite des Autoklaven angebracht ist, und wobei
zwischen dem Motorgehäuse und dem Autoklav eine Wellendichtung eingebaut ist und das Innere des Motorgehäuses über eine Druckleitung an den Innenraum des Autoklaven angeschlossen ist.

Der Erfindung liegt die Aufgabe zugrunde, einen Reaktor vorzuschlagen, bei dem mit einfachen Mitteln das Dichtungsproblem für das im Produktbehälter befindliche Rührwerk oder Schleuderwerk vereinfacht und dementsprechend der Aufwand für eine wirksame Abdichtung gesenkt werden kann und wobei Druckschwankungen im Reaktor möglichst schnell ausgeglichen werden, um temporäre einseitige Druckbelastungen an der Dichtung zu verringern.

Diese Aufgabe wird erfindungsgemäß bei einem Reaktor der eingangs genannten Gattung mit den Merkmalen des kennzeichnenden Teiles des Patentanspruches 1 gelöst.

Bei Reaktoren, d.h. bei Vakuum- und/oder Druckapparaten, bei denen zur Abdichtung der Durchgänge ein spezielles Dichtsystem notwendig ist, an dem abtriebsseitigen Kopfende oder Stirnende des Produktbehälters die Lagerung des Wellenendes des Rührwerkes oder Schleuderwerkes nach außen hermetisch gekapselt, so daß hier keine komplizierte und kostspielige Spezialdichtung notwendig ist, sondern man mit einer Dichtung oder einem Dichtsystem auskommt, welche bzw. welches den produktspezifischen Anforderungen der im Produktbehälter zu verarbeitenden Produkte genügt, ohne zugleich auch noch Druckunterschiede zwischen dem Innenraum des Produktbehälters und der umgebenden Atmosphäre ausgleichen zu müssen. Zu diesem Zweck wird die dem abtriebsseitigen Wellenende, d.h. dem Ende der Rührwerks- oder Schleuderwerkswelle, das nicht mit dem Antrieb verbunden ist, zugeordnete Lagerlaterne hermetisch gekapselt, so daß keine Druckdifferenz zwischen den beiden Enden der hier vorgesehenen Dichtung herrscht, weil man den Druck zwischen dem Innenraum des Produktbehälters und der Außenseite der Dichtung, d.h. also dem gekapselten Raum der Lagerlaterne, ausgleichen kann. Dies wird durch eine Druckregelung im gekapselten Raum erreicht.

Der Erfindung liegt die Erkenntnis zugrunde, daß man bei Reaktoren, d.h. also bei Vakuum- und/oder Druckapparaten, welche ein an den Stirnenden gelagertes Rühr- oder Schleuderwerk enthalten, das an einem Stirnende vorgesehene Lager für das Rühr- oder Schleuderwerk nach außen kapseln kann, so daß die dort vorhandene Dichtung an der Wellendurchführung durch das entsprechende Stirnende des Produktbehälters allein eine Dichtungsfunktion für das im Inneren des Produktbehälters verwandte Produkt erfüllen muß, nicht aber auch noch Druckunterschieden standzuhalten hat. Das entgegengesetzte Ende der Wellendurchführung ist im allgemeinen nicht in gleicher Weise druckmäßig nach außen zu kapseln, weil an dieses Ende der Antrieb angeschlossen ist, der sich nur mit verhältnismäßig großem Aufwand in einer hermetischen Kapselung unterbringen läßt. Dementsprechend ist das eine Ende der Welle des Rühr- oder Schleuderwerkes mit einer einfachen bzw. normalen Dichtung durch die Stirnwand des Produktbehälters hindurchführbar, während man lediglich am anderen Ende eine kompliziertere Dichtung benötigt, welche nicht nur ein Durchtreten des Produktes, sondern auch einen Druckausgleich verhindern soll.

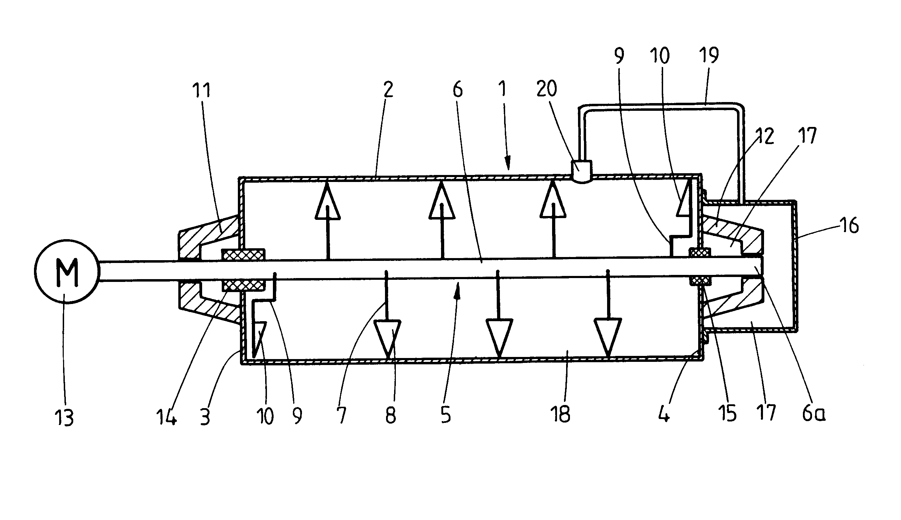

In der Zeichnung ist eine Ausführungsform eines Reaktors schematisch in einem Längsschnitt dargestellt, bei dem der Druckausgleich entsprechend der DE-A-2 913 032 vorgenommen wird.

Der Reaktor (1) hat einen trommelförmigen Produktbehälter (2) mit kreisförmigem Querschnitt, dessen Stirnenden durch kreisscheibförmige Wände (3 und 4) geschlossen sind. Mittig bzw. zentral in dem Produktbehälter (3) ist ein Rühr- oder Schleuderwerk (5) angeordnet, das eine zentrale Welle (6) aufweist, an der wendelförmig verteilt radiale Arme (7) befestigt sind, die am äußeren Ende jeweils ein beispielsweise pflugscharartig ausgebildetes Mischwerkzeug (8) tragen, das nahe der zylinderförmigen Innenwand des Produktbehälters (2) angeordnet ist und dort umläuft. Nahe den Stirnwänden (3 und 4) sind an der Welle (6) abgewinkelte Arme (9) befestigt, an deren äußeren Ende jeweils ein halbes Mischwerkzeug (10) befestigt ist.

Die Welle (6) des Rühr- oder Schleuderwerkes (5) ist durch beide Stirnwände (3 und 4) hindurchgeführt und auf der Außenseite der Stirnwände (3 und 4) jeweils in einer sogenannten Lagerlaterne (11 bzw. 12) gelagert, die von der Außenseite der entsprechenden Stirnwand (3 bzw. 4) befestigt ist. Die Welle (6) ist durch die in der Zeichnung links dargestellte Lagerlaterne (11) hindurchgeführt und mit einem Antrieb verbunden, der durch einen Motor (13) schematisch angedeutet ist. Der Antrieb kann auch Getriebe oder sonstige Antriebselemente umfassen, die hier aus Gründen der Vereinfachung nicht dargestellt sind.

An den Durchgängen der Welle (6) durch die Stirnwände (3 und 4) sind Dichtungen (14 und 15) vorgesehen, welche verhindern, daß das im Produktbehälter (2) verarbeitete Gut auf die Außenseite des Produktbehälters gelangen kann. Die Dichtung (14) ist eine Spezialdichtung, welche nicht nur einen Austritt von Produkt aus dem Inneren des Produktbehälters (2) über die Welle (6) nach außen verhindert, sondern auch dafür sorgt, daß kein Druckausgleich zwischen der äußeren Atmosphäre und dem Inneren des Produktbehälters (2) stattfinden kann, da hier ein Druckgefälle vorhanden ist. Die Dichtung (15) ist hingegen eine einfache Dichtung, die nur als Materialabdichtung dient und nicht auch dazu dienen muß, einen Ausgleich zu verhindern.

Zu diesem Zweck ist die das abtriebsseitige Ende (6a) der Welle (6) abstützende Lagerlaterne (12) in einem Gehäuse (16) untergebracht, das an der Stirnwand (4) des Produktbehälters (2) bzw. am entsprechenden Stirnende desselben angebaut ist und die Lagerlaterne (12) nach außen hermetisch abkapselt. Daher kann im Innenraum (17) dieses Gehäuses (16) und der darin untergebrachten Lagerlaterne (12) derselbe Druck wie im Innenraum (18) des Produktbehälters (2) eingestellt und aufrecht erhalten werden. Die Dichtung (15) braucht daher nicht dafür ausgelegt zu sein, einen Druckausgleich zu verhindern. Vielmehr genügt es, die Dichtung (15) so auszulegen, daß sie ein Austreten von Produkt aus dem Produktbehälter (2) durch die Stirnwand (4) verhindert.

Um einen Druckausgleich zwischen dem Innenraum (18) des Produktbehälters (2) und dem Innenraum (17) des Gehäuses (16) zu erreichen, ist beim dargestellten Ausführungsbeispiel eine Verbindungsleitung (19) vorgesehen, welche ein Sieb oder Filter (20) enthält, das dafür sorgt, daß aus dem Innenraum (18) des Produktbehälters (2) kein Material in den Innenraum (17) des Gehäuses (16) übertritt, jedoch den Druckausgleich nicht beeinträchtigt.

Bei der Erfindung ist an das Gehäuse (16) ein nicht dargestellter Druckausgleichsregler angeschlossen, der von einem im Produktbehälter (2) angeordneten Druckfühler oder -sensor gesteuert ist.

## Patentansprüche

1. Reaktor zum Behandeln von Schüttgütern od.dgl., mit einem druckdicht zu verschließenden, horizontal angeordneten, trommelförmigen Produktbehälter (2), in dem mittig ein Rührwerk (5) angeordnet ist, dessen zentrale Welle (6) in Dichtungen (14, 15) durch die Stirnwände (3, 4) des Produktbehälters hindurchragt und in an den Stirnenden des Produktbehälters angeordneten Lagern (11, 12) drehbar abgestützt ist, **dadurch gekennzeichnet,** daß das an dem abtriebsseitigen Ende (6a) der zentralen Welle (6) vorgesehene Lager hermetisch nach außen gekapselt ist, wobei im das gekapselte Lager aufnehmenden Gehäuse (16) derselbe Druck wie im Produktbehälter (2) herrscht, und daß an das Kapsel-Gehäuse (16) ein Druckausgleichsregler angeschlossen ist, der von einem im Produktbehälter (2) angeordneten Druckfühler oder -sensor gesteuert ist.

## Claims

1. Reactor for treating bulk materials or the like, with a pressure-tight closable horizontally disposed drum-shaped product container (2) in which there is centrally arranged a stirring device (5) of which the central shaft (6) projects through seals (14, 15) in the end faces (3, 4) of the product container and is rotatably supported in bearings (11, 12) arranged on the end faces of the container, characterised in that the bearing provided on the drive-out end (6a) of the central shaft (6) is hermetically encapsulated with respect to the outside, the housing (16) which receives the encapsulated bearing having within it the same pressure as in the product container (2) and that there is connected to the encapsulating housing (16) a pressure balance regulator which is controlled by a pressure transducer or sensor arranged in the product container (2).

**Revendications**

1.  Réacteur pour le traitement de produits en vrac ou similaires, comportant un récipient à produits (2) en forme de tambour, placé horizontalement, fermant de manière étanche à la pression, au centre duquel est placé un agitateur (5) dont l'arbre central (6) traverse, dans des organes d'étanchéité (14, 15), les parois frontales (3, 4) du récipient à produits et est soutenu tournant dans des paliers (11, 12) placés aux extrémités frontales du récipient à produits, caractérisé en ce que le palier prévu à l'extrémité (6a) côté sortie de l'arbre central (6) est hermétiquement blindé vers l'extérieur, la même pression régnant dans le boîtier (16) logeant le palier blindé que dans le récipient à produits (2), et en ce qu'il est raccordé au boîtier de blindage (16) un régulateur d'équilibrage de pression qui est commandé par une sonde ou capteur de pression placé dans le récipient à produits (2).

EP 0 313 756 B1

5